# EUROPEAN PATENT APPLICATION

(11) **EP 4 443 366 A1**
(43) Date of publication of application: **09.10.2024**
(21) Application number: 24157732.9
(22) Date of filing: 15.02.2024
(51) Int. Cl.: G06Q 20/32, G06Q 20/40, G07F 9/00, G07F 13/02, H04L 9/40

(54) **SYSTEM AND METHOD FOR CONTROLLING THE DISPENSING OF FUEL BY A DISTRIBUTION FACILITY**

(30) Priority: 04.04.2023 IT 202300006585
(71) Applicant: PIUSI S.p.A., 46029 Suzzara (MN) (IT)
(72) Inventor: FRIGNANI, Manuel, 46034 BORGO VIRGILIO MN (IT); CARRERO, Luca, 46014 CASTELLUCCHIO MN (IT); FERRARI, Marco, 46023 GONZAGA, FRAZIONE PALIDANO MN (IT)
(74) Representative: Modiano, Micaela Nadia

(57) **Abstract**

A system for controlling the dispensing of fuel by a distribution facility, which comprises at least one dispensing unit (12), at least one mobile processing device (14), operated by a respective driver user (72), and a remote central processing device (20). The dispensing unit (12) and the mobile device (14) are mutually connectable via a short-range wireless communication network (13). The mobile device (14) and the remote central device (20) are mutually connectable via a telematic communication network (18); the mobile device (14) comprises geolocation means (31), configured to detect the geographical position where the mobile device is located (14), and an authorization verification module (34) configured to enable the dispensing of fuel by the dispensing unit (12) as a result of the connection between the mobile device (14) and the dispensing unit (12), via respective short-range wireless communication modules (26, 36), if the geographical position detected by the geolocation means (31) is located within a predetermined authorized geographical area.

## Description

The present invention relates to a system and a method for controlling the dispensing of fuel by a distribution facility.

Fuel distribution systems for private use are known, which are used by companies that own motor vehicles, such as for example companies operating in the goods transport and logistics sector, in the shipping sector or in the construction sector or site operations sector, for refueling their motor vehicles.

These systems are typically provided with one or more dispensing units or fuel pumps arranged in a fixed position on a forecourt located in a given geographical area.

It is also possible for the dispensing units to be constituted by one or more mobile storage tanks which can be deployed at one or more building sites or other work areas, located in different geographical areas, in order to allow the refueling of motor vehicles used at such sites.

In particular, each dispensing unit is organized to allow the refueling of motor vehicles by drivers who work for the company that owns the facility, by dispensing a fuel, such as gasoline, Diesel fuel, LPG or the like, into the tank of the motor vehicles.

Typically, to perform the refueling at a distribution facility, drivers need to stop the motor vehicle beside a dispensing unit, take a dispensing nozzle from the dispensing unit and insert it in the filler neck of the tank of the motor vehicle, and begin dispensing fuel until the tank is filled to the desired level.

Since, in distribution facilities for private use, in order to proceed with refueling of motor vehicles no payment is required of the drivers, before or after dispensing the fuel, this type of distribution facility is particularly prone to indiscriminate and uncontrolled refueling operations.

In fact, fuel distribution systems for private use are normally not equipped with devices that can track or register the various dispensing operations performed, nor are they equipped with means for conducting a preliminary check of the identity and/or authorization of users, before those users perform the dispensing operations.

For these reasons systems have been provided that can overcome the drawbacks described above, by enabling companies that own distribution facilities not only to track and control the amount of fuel dispensed in each instance at each dispensing operation performed by drivers at the dispensing units of distribution facilities, but also to preliminarily verify the identity of the user, before the user performs the refueling, and refuse to allow the user to dispense fuel from the dispensing units, if that user is not authorized.

In particular, systems have been provided that entail the use of mobile processing devices, constituted by smartphones carried by the drivers employed by the companies that own the systems, which are configured, via a dedicated software application installed on them, to be able to establish a short-range wireless communication session with the fuel pumps in the distribution facility and to communicate via a telematic communication network with a remote central processing device, constituted by a server, managed by the company that owns the distribution system.

In this way, the mobile processing devices are able to transmit data originating from the dispensing units, such as for example data relating to single dispensing operations, to the remote central processing device, and it is also possible to perform the authentication of the identity of the users via pairing operations between the dispensing units and the mobile processing devices.

Although such systems have been shown to be effective, they do, however, have room for improvement.

In fact, the known systems display limitations in the management and control of the refueling operations performed based on the geographical area where the distribution facilities are located, and so they do not allow companies to enable its drivers to perform dispensing operations only at dispensing units located in certain geographical areas and not in others.

Furthermore, the known systems are not fully satisfactory for controlling transfers of fuel from one tank to another, such as in cases where fuel is taken from fixed fuel pumps at a distribution facility in order to fill tanker trucks which are used to transport the fuel to building sites or other work areas, where the fuel is then used to fill mobile storage tanks which are used to refuel the motor vehicles in use at those building sites.

In particular, the known systems are not designed to allow control of dispensing operations at such mobile tanks.

Another limitation of the known systems is that they do not allow companies to keep track of refueling operations performed by motor vehicles belonging to other companies at their distribution facilities or at building sites resupplied with fuel taken from their distribution facilities.

The aim of the present invention is to provide a system and a method for controlling the dispensing of fuel by a distribution facility that are capable of improving the known art in one or more of the above-mentioned aspects.

Within this aim, an object of the invention is to provide a system and a method for controlling the dispensing of fuel by a distribution facility that make it possible to enable refueling by drivers only in certain geographical areas.

Another object of the invention is to provide a system and a method for controlling the dispensing of fuel by a distribution facility that make it possible to control transfers of fuel from one tank to another.

A further object of the invention is to provide a system and a method for controlling the dispensing of fuel by a distribution facility that make it possible to keep track of refueling operations by motor vehicles owned by other companies.

Another object of the invention is to provide a system and a method for controlling the dispensing of fuel by a distribution facility that make it possible to improve the process of authentication of drivers enabled for refueling operations, with respect to the known art.

Another object of the present invention is to devise a system and a method for controlling the dispensing of fuel by a distribution facility that make it possible to perform dispensing operations in a flexible manner, in particular independently of conditions of connection to a telematic communication network.

Another object of the present invention is to conceive a system and a method for controlling the dispensing of fuel by a distribution facility that make it possible to take advantage of suitable reports in order to allow the monitoring, by a user in charge, of the dispensing operations performed via the distribution facility.

Another object of the invention is to provide a system and a method for controlling the dispensing of fuel by a distribution facility that offer the widest guarantees of reliability and safety.

A still further object of the present invention is to overcome the drawbacks of the known art in an alternative manner to any existing solutions.

Another object of the invention is to provide a system and a method for controlling the dispensing of fuel by a distribution facility that are relatively simple to implement and which can be provided at low cost.

This aim and these and other objects which will become better apparent hereinafter are achieved by a system according to claim 1, optionally provided with one or more of the characteristics of the dependent claims.

Further characteristics and advantages of the invention will become better apparent from the description of a preferred, but not exclusive, embodiment of the system and of the method according to the invention, which is illustrated by way of non-limiting example in the accompanying drawings wherein:

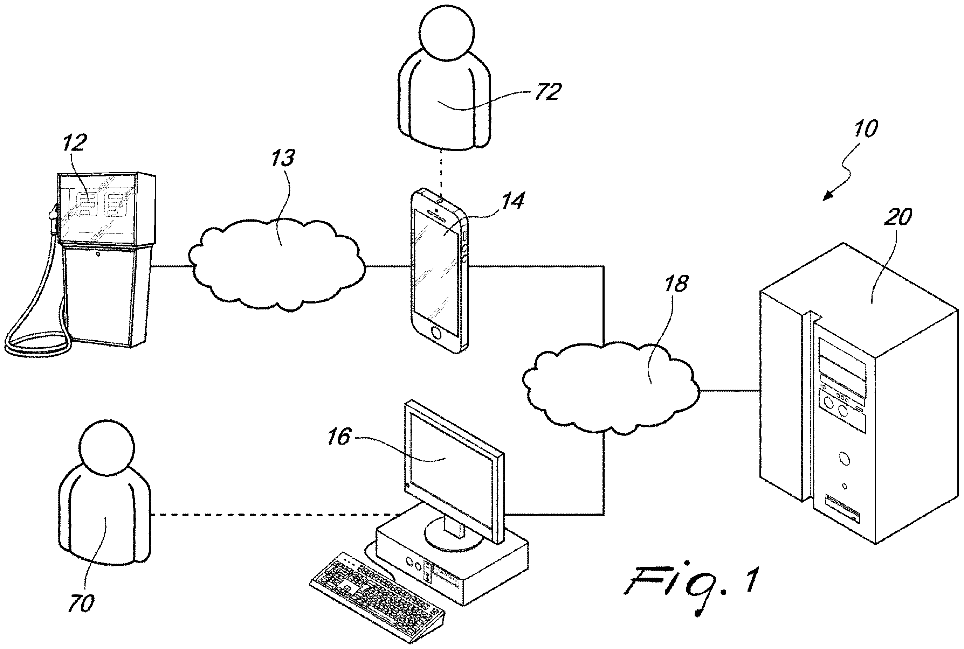

Figure 1 is a schematic diagram of an embodiment of the system according to the invention;
Figure 2 is a schematic diagram of a remote central processing device of the system according to the invention;
Figure 3 is a schematic diagram of a mobile processing device of the system according to the invention;
Figure 4 is a schematic diagram of a dispensing unit of the system, according to the invention.

With reference to the figures, the system for controlling the dispensing of fuel by a distribution facility according to the invention, generally designated by the reference number 10, which comprises at least one dispensing unit 12, at least one mobile processing device 14, and a remote central processing device 20.

In particular, the distribution facility that is controlled by means of the system according to the invention is a distribution facility for private use i.e. a distribution facility owned by a company which is used, principally by that company, to enable the refueling of its own motor vehicles with fuel.

Conveniently, the distribution facility can be equipped with multiple dispensing units 12 which can be situated at great distances from each other, such as for example in different cities, but also in different regions or even in different countries.

For example, the dispensing units 12 can be constituted by fuel pumps installed in fixed positions, for example at a parking area for motor vehicles belonging to the company that owns the distribution facility, and which are configured to take the fuel from a fixed tank, normally buried below road level, or they can be constituted by mobile storage and dispensing tanks, which can be moved to various places of use, such as for example work areas, such as building sites or the like, where the motor vehicles belonging to the company that owns the distribution facility operate.

Each one of the dispensing units 12 comprises respective local storage means 30 which are configured to store various different data items, as explained in more detail below.

Conveniently, the system 10 according to the invention can further comprise at least one operator processing device 16.

In more detail, the dispensing unit 12 and the mobile device 14 are mutually connected or connectable via a short-range wireless communication network 13, preferably of the Bluetooth type, and even more preferably of the BTLE (Bluetooth Low Energy) type.

The mobile device 14 and the remote central device 20 are mutually connected or connectable via a telematic communication network 18, for example the internet.

Similarly, the operator device 16 and the remote central device 20 are mutually connected or connectable via the telematic communication network 18.

The mobile device 14, such as for example a smartphone or a tablet computer, is operated by a driver user 72 of the system 10 according to the invention, such as for example a driver employed by the company that owns the distribution facility, who can avail of the distribution facility, for example, to perform the refueling of his or her motor vehicle when necessary or to perform a transfer of fuel from a fixed tank to a mobile storage and dispensing tank or to allow the refueling of motor vehicles belonging to third-party companies, other than the company that owns the system, as will also be explained below.

The operator device 16, such as for example a desktop computer but also a smartphone or a tablet computer, is operated by a user in charge 70 of the system 10 according to the invention, such as for example the owner or the manager of the company that owns the facility, who supervises the dispensing operations performed using the facility and monitors the fuel consumption.

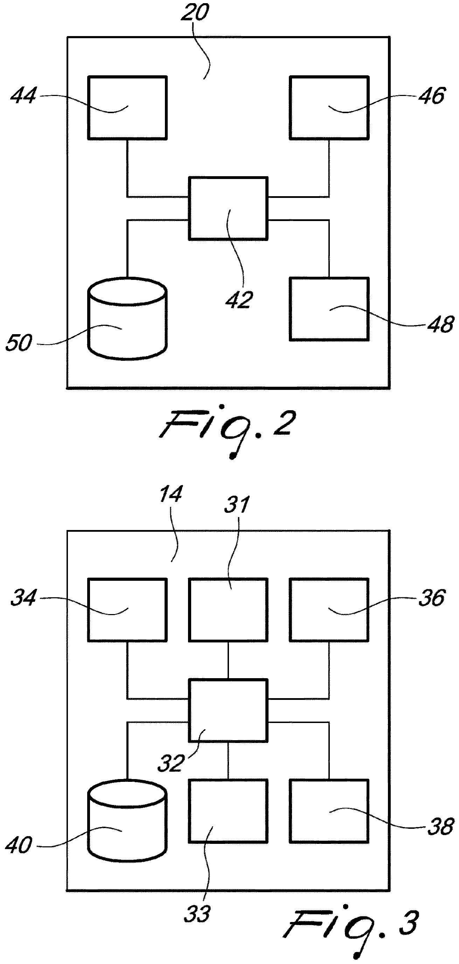

With reference to Figure 2, the remote central processing device 20 can be a device of the server type, preferably a web server, which comprises an electronic control unit 42, interface means 44, a telematic communication module 48, and remote storage means 50.

The electronic control unit 42 is the main functional element of the remote central device 20, and for this reason it is connected to and in communication with the other operating and/or functional elements that are comprised in the remote central device 20.

The electronic control unit 42 of the remote central device 20 is provided with adapted processing capacity and capacity to interface with the other elements of the remote central device 20, and it is adapted to command, control and coordinate the operation of the elements of the remote central device 20 with which it is connected and in communication, as well as to execute the operations to process the data or the requests arriving from such elements of the remote central device 20, from the mobile device 14 and/or from the operator device 16, and return the corresponding results to them.

The interface means 44 of the remote central device 20 are the means by way of which the operator device 16, operated by the user in charge 70, interacts in input and/or in output with that remote central device 20.

The interface means 44 substantially offer as output and/or collect as input a plurality of information in the form of screen forms, which can be compiled if necessary, that the user in charge 70 can in each instance select and display via the operator processing device 16.

By way of example, the interface means 44 of the remote central device 20 offer the user in charge 70, via the operator device 16, the ability to create and update the information and data stored in the remote storage means 50 of the central remote device 20.

In particular, they enable the user in charge 70 to: compile or update a list of driver users 72 who are registered with and authorized to use the dispensing units 12; compile or update a list of authorized geographical areas i.e. a list of geographical areas where the company that owns the facility allows its drivers to take fuel at the dispensing units 12 of the system; compile or update a list of third-party companies, other than the company that owns the distribution facility, that are authorized to perform dispensing operations at dispensing units 12 of the facility and, for each one of these third-party companies, a list of the corresponding authorized vehicles; compile or update the list of available dispensing units 12 in the facility; or configure the operating parameters of the dispensing units 12.

The interface means 44 can offer the user in charge 70, via the operator device 16, the ability to create and compile an account or profile associated with each user in charge 70 or driver 72. Similarly, the interface means 44 can offer the user in charge 70, via the operator device 16, the ability to create and compile an account or profile associated with each dispensing unit 12.

In a preferred embodiment, the remote central device 20 further comprises a report module 46. The report module 46 is configured to produce and provide, starting from what is stored in the remote storage means 50, aggregate information and statistical data on the dispensing operations taken together and individually, preferably producing summary tables and charts of the refueling operations performed by the driver users 72.

The report module 46 of the remote central device 20 furthermore makes it possible to conserve such aggregate information and statistical data, via their storage in the remote storage means 50.

In this preferred embodiment, the interface means 44 of the remote central device 20 also offer the user in charge 70 the ability to request and display such aggregate information and statistical data, preferably in the form of summary tables and charts, produced by the report module 46.

The report module 46 provides detailed information, delayed or in real time, on the operations to dispense fuel performed using the facility and on the amount of fuel dispensed, including for example the number of dispensing operations performed by a specific driver user 72 or at a specific dispensing unit 12, or the amount of fuel dispensed by an individual dispensing unit 12 or by a plurality of dispensing units 12, all in chart form and in table form.

This can be done for example on the basis of a time interval, on the basis of the city or geographical area, on the basis of the driver user 72 (for example by filtering on the identification code), on the basis of the motor vehicle (for example filtering on the license plate), on the basis of the type of fuel, or indeed on the basis of the dispensing unit 12.

The telematic communication module 48 of the remote central device 20 is adapted for the connection and preferably bidirectional communication, of the remote central device 20 with the mobile device 14 and with the operator device 16, via the telematic communication network 18.

The remote storage means 50 of the remote central device 20 are adapted to store all the information and all the data items relating to the system 10 in its entirety.

In particular, the remote storage means 50 can, for example, store the last (i.e. the most recent) version of the operating parameters of each dispensing unit 12, the last (i.e. the most recent) version of the list of driver users 72 who are registered and authorized to perform refueling operations at the dispensing units 12, the last (i.e. the most recent) version of the list of authorized geographical areas, the last (i.e. the most recent) version of the list of third-party companies that are authorized to perform dispensing operations at dispensing units 12 of the facility and of the list of the corresponding authorized vehicles, as well as the last (i.e. the most recent) version of the list of available dispensing units 12 in the facility.

The remote central device 20 is configured to send to the mobile device 14, via the telematic communication network 18, the last (i.e. the most recent) version of the operating parameters of each dispensing unit 12 where the specific driver user 72 who is operating that mobile device 14 is authorized to perform dispensing operations, the last (i.e. the most recent) version of the list of driver users 72 who are registered and authorized to perform refueling operations at the dispensing units 12, the last (i.e. the most recent) version of the list of authorized geographical areas, the last (i.e. the most recent) version of the list of third-party companies that are authorized to perform dispensing operations at dispensing units 12 of the facility and of the list of the corresponding authorized vehicles, as well as the last (i.e. the most recent) version of the list of available dispensing units 12 in the facility.

Furthermore, the remote storage means 50 store the information and data for all the registered and authorized driver users 72, and which are transmitted from the operator device 16 to the remote central processing device 20 via the telematic communication network 18.

By way of example, the remote storage means 50 can store, for each driver user 72: an identification code (DriverID), the name and surname, optionally an authentication code (for example a PIN and/or an iButton code), optionally an enabling flag (a bit or the like that identifies whether or not the driver user 72 is enabled for dispensing at the dispensing units 12 of the facility), and a list of dispensing operations.

The remote storage means 50 can furthermore store, for each driver user 72, a list of the types of dispensing operations permitted to the driver user 72 at the dispensing units 12 of the facility.

In particular, the remote storage means 50 can, for example, store, for each driver user 72, at least one indicator data item, constituted for example by a flag, such as a bit or the like, which indicates, for example, whether the driver user 72 is enabled to perform, at the dispensing units 12 of the facility, only dispensing operations to refuel motor vehicles owned by the company that owns the facility or whether he/she is also enabled to perform, at the dispensing units 12 of the facility, dispensing operations to transfer fuel from a fixed tank to mobile tanks and/or dispensing operations to refuel motor vehicles owned by third-party companies.

Note that the remote storage means 50 do not store an identification code of the mobile device 14 operated by the driver user 72.

The remote central device 20 is configured to send to the mobile device 14, via the telematic communication network 18, the information and data for the specific driver user 72 who is operating that mobile device 14, in particular an identification code (DriverID), name and surname, optionally an authentication code (for example a PIN and/or an iButton code), and optionally an enabling flag.

Furthermore, the remote storage means 50 store the information and data relating to all the dispensing operations performed at all the dispensing units 12, which are transmitted by the mobile devices 14 to the remote central processing device 20 via the telematic communication network 18. By way of example, the remote storage means 50 can store, for each dispensing operation: an identification code of the dispensing unit 12 where the dispensing was performed, an identification code of the dispensing operation, the date and time of dispensing, the amount of fuel dispensed in the dispensing operation, the identification code of the driver user 72 who performed the dispensing, the name and surname of the driver user 72 who performed the dispensing, the license plate of the motor vehicle refueled in the dispensing operation, the make and/or model of the motor vehicle refueled in the dispensing operation, at least one indicator data item, like a code or a flag, that identifies the type of dispensing operation performed, for example whether the dispensing was performed to refuel a motor vehicle owned by the company that owns the facility or to conduct a transfer of fuel or to refuel a motor vehicle owned by a third-party company.

The remote central device 20 is configured to receive from the mobile device 14, via the telematic communication network 18, information and data relating to past dispensing operations performed at the dispensing unit 12, if that information and data has not already been received.

Furthermore, the remote storage means 50 can store an account or profile associated with each user in charge 70 or driver user 72.

Similarly, the remote storage means 50 can store an account or profile associated with each dispensing unit 12.

By way of example, the remote storage means 50 can store, for each dispensing unit 12, at least one data item indicating the types of dispensing operations permitted to the dispensing unit 12, such as, for example, dispensing fuel for refueling only motor vehicles owned by the company that owns the facility, or dispensing fuel for conducting the transfer of fuel for filling mobile tanks, or dispensing fuel for performing the refueling of motor vehicles owned by third-party companies.

In particular, for each dispensing unit 12 the remote storage means 50 can store an enabling flag, such as a bit or the like, that identifies whether the dispensing unit is enabled to dispense fuel for transfer and to dispense fuel for refueling motor vehicles of third-party companies.

In an embodiment, the remote storage means 50 can be external to the remote central processing device 20; in this case, the remote central device 20 further comprises means of interfacing with the remote storage means 50.

The operator processing device 16, which as mentioned is for example a computer desktop but which can also be a smartphone or a tablet computer, is configured to process information and data following instructions supplied by the user in charge 70.

The operator device 16 comprises a telematic communication module which is adapted for the connection and preferably bidirectional communication, of the operator device 16 with the remote central device 20, via the telematic communication network 18.

The operator device 16 is configured to enable the user in charge 70 to interact with the interface means 44 of the remote central device 20. By way of example, the operator device 16 interfaces with the remote central device 20, offering the user in charge 70 the ability to: create and update information and data stored in the remote storage means 50 of the remote central device 20, or in the mobile storage means 40 of the mobile device 14, or in the local storage means 30 of the dispensing units 12; update the list of driver users 72 who are registered and authorized to use the dispensing units 12; update the list of authorized geographical areas for performing dispensing operations; update the list of third-party companies that are authorized to perform dispensing operations at dispensing units 12 of the facility and the list of the corresponding authorized vehicles; update the list of dispensing units 12 available in the facility; update the types of dispensing operations permitted to individual driver users 72; update the types of dispensing operations permitted to individual dispensing units 12; configure the operating parameters of the dispensing units 12; or request and display summary tables and charts generated by the report module 46.

The operator device 16 interfaces with the remote central device 20, offering the user in charge 70 the ability to create and compile an account or profile associated with each user in charge 70 or driver 72. Similarly, the operator device 16 interfaces with the remote central device 20, offering the user in charge 70 the ability to create and compile an account or profile associated with each dispensing unit 12.

With reference to Figure 3, the mobile processing device 14, which as mentioned is for example a smartphone or a tablet computer, of the system 10 for controlling the dispensing of fuel by a distribution facility, according to the invention, comprises an electronic control unit 32, an authorization verification module 34, a short-range wireless communication module 36, a telematic communication module 38, and mobile storage means 40.

According to the invention, the mobile device 14 further comprises geolocation means 31, which are configured to detect the geographical position where the mobile device 14 is located.

For example, such geolocation means 31 comprise at least one GPS antenna.

Advantageously, the mobile device 14 is configured to acquire, preferably after a login operation or the like, the geographical position where the mobile device 14 is located, by way of geolocation means 31.

Advantageously, the mobile device 14 further comprises user interface means 33 which enable the driver user 72, who operates on the mobile device 14, to interact in input and/or in output with that mobile device 14.

In particular, the user interface means 33 can be, for example, provided by a screen, preferably a touch screen, which enables the driver user 72 to display and enter information by means of screen forms. Optionally, the user interface means 33 of the mobile device 14 can also comprise a keypad or other data entry device.

By way of example, the user interface means 33 of the mobile device 14 offer the driver user 72 the ability to select the type of dispensing operations that he/she intends to perform at the dispensing unit 12.

The electronic control unit 32 is the main functional element of the mobile device 14, and for this reason it is connected to and in communication with the other operating and/or functional elements that are comprised in the mobile device 14.

The electronic control unit 32 of the mobile device 14 is provided with adapted processing capacity and capacity to interface with the other elements of the mobile device 14, and it is adapted to command, control and coordinate the operation of the elements of the mobile device 14 with which it is connected and in communication, as well as to execute the operations to process the data or the requests arriving from such elements of the mobile device 14 and/or from the dispensing unit 12 and/or from the remote central device 20, and return the corresponding results to them.

The short-range wireless communication module 36 of the mobile device 14, preferably of the Bluetooth type, and even more preferably of the BTLE (Bluetooth Low Energy) type, is adapted for the connection and preferably bidirectional communication, of the mobile device 14 with the dispensing unit 12, via the short-range wireless communication network 13. In particular, this short-range wireless communication session is established when the mobile device 14 and the dispensing unit 12 are within mutual reach, i.e. at an operating distance.

In order to establish a short-range wireless communication, preferably bidirectional, session between them, the dispensing unit 12 and the mobile device 14 can be configured to execute pairing operations, i.e. the process of mutual recognition that for example takes place when two Bluetooth devices are connected to each other, and which consists of exchanging and verifying a unique identification code, in order to authorize the subsequent exchange of data between those devices.

In other words, once the dispensing unit 12 and the mobile device 14, and in particular the respective short-range wireless communication modules, are arranged at a suitable distance (for example within a range of 10-15 meters) or even substantially in contact, they exchange handshaking information, such as for example a unique identification code that enables mutual recognition.

The telematic communication module 38 of the mobile device 14 is adapted for the connection and preferably bidirectional communication, of the mobile device 14 with the remote central device 20, via the telematic communication network 18.

The mobile storage means 40 of the mobile device 14 are adapted to store a portion of the information and data stored in the remote storage means 50 of the remote central device 20.

The mobile device 14 is configured to receive, or rather download, preferably following a login operation or the like, from the remote central device 20, via the telematic communication network 18, the last (i.e. the most recent) version of the operating parameters of each dispensing unit 12 for which the specific driver user 72 who is operating that mobile device 14 is authorized, and the last (i.e. the most recent) version of the list of driver users 72 who are registered and authorized to perform refueling operations at the dispensing units 12.

The mobile device 14 is, moreover, also configured to receive, or rather download, preferably following a login operation or the like, from the remote central device 20, via the telematic communication network 18, the last (i.e. the most recent) version of the list of authorized geographical areas, the last (i.e. the most recent) version of the list of third-party companies that are authorized to perform dispensing operations at dispensing units 12 of the facility and of the list of the corresponding authorized vehicles, the last (i.e. the most recent) version of the list of available dispensing units 12 in the facility, the last (i.e. the most recent) version of the list of types of dispensing operations that are permitted to each driver user 72, as well as the last (i.e. the most recent) version of the data item indicating the types of dispensing operations that are permitted to individual dispensing units 12.

The mobile storage means 40 of the mobile device 14 store the last (i.e. the most recent) version of the operating parameters of each dispensing unit 12 for which the specific driver user 72 who is operating that mobile device 14 is authorized, the last (i.e. the most recent) version of the list of driver users 72 who are registered and authorized to perform dispensing operations at the dispensing units 12, the last (i.e. the most recent) version of the list of authorized geographical areas, the last (i.e. the most recent) version of the list of third-party companies that are authorized to perform dispensing operations at dispensing units 12 of the facility and of the list of the corresponding authorized vehicles, the last (i.e. the most recent) version of the list of available dispensing units 12 in the facility, the last (i.e. the most recent) version of the list of types of dispensing operations that are permitted to each driver user 72, as well as the last (i.e. the most recent) version of the data item indicating the types of dispensing operations that are permitted to individual dispensing units 12.

In particular, the mobile storage means 40 store the last (i.e. the most recent) version of the list of driver users 72 who are registered and authorized to perform refueling operations at the dispensing units 12, so that the driver user 72 can obtain clearance to use the dispensing unit 12 to perform the refueling of his or her motor vehicle, even if the connection with the telematic communication network 18 is temporarily unavailable for communication with the remote central processing device 20.

In addition, the mobile device 14 is configured to receive, or rather download, preferably following a login operation or the like, from the remote central device 20, via the telematic communication network 18, the information and data for the specific driver user 72 who is operating that mobile device 14, in particular an identification code (DriverID), name and surname, optionally an authentication code (for example a PIN and/or an iButton code), and optionally an enabling flag, as well as at least one data item indicating, or a list of the types of, the dispensing operations permitted to the driver user 72.

The mobile storage means 40 of the mobile device 14 store the information and data for the specific driver user 72 who is operating that mobile device 14, in particular an identification code (DriverID), name and surname, optionally an authentication code (for example a PIN and/or an iButton code), and optionally an enabling flag, and the types of dispensing operations permitted to the driver user 72.

The mobile device 14 is configured to receive the data originating from the dispensing unit 12, via the short-range wireless communication network 13, and to forward it to the remote central device 20, via the telematic communication network 18. For example, these data correspond to the past dispensing operations performed at the dispensing unit 12, if such data have not already been received and forwarded.

Similarly, the mobile device 14 is configured to receive the data originating from the remote central device 20, via the telematic communication network 18, and to forward it to the dispensing unit 12, via the short-range wireless communication network 13. For example, these data correspond to the last (i.e. the most recent) version of the operating parameters of the dispensing unit 12, and/or to the last (i.e. the most recent) version of the list of driver users 72 who are registered and authorized to perform refueling operations at the dispensing units 12.

The mobile device 14 is also configured to receive from the remote central device 20, via the telematic communication network 18, and forward to the dispensing unit 12, via the short-range wireless communication network 13, the data item indicating the types of dispensing operations that are permitted to the dispensing unit 12.

The local storage means 30 of the dispensing unit 12 are configured to store the operating parameters of the dispensing unit 12, and the list of driver users 72 who are registered and authorized to perform refueling operations at the dispensing units 12.

The local storage means 30 of the dispensing unit 12 are also configured to store the data item indicating the types of dispensing operations permitted to the dispensing unit 12.

The mobile device 14 is furthermore also configured to transmit the geographical position acquired by the geolocation means 31 to the dispensing unit 12, via the short-range wireless communication network 13.

The local storage means 30 of the dispensing unit 12 are configured to store the geographical position acquired by the geolocation means 31 and transmitted to the dispensing unit 12 by the mobile device 14.

Note that the mobile device 14 does not necessarily need to be connected to the telematic communication network 18 except when receiving data originating from the remote central device 20 or when transmitting data to it, as described above. Therefore, the system 10 according to the invention can function even in the absence of a connection to the telematic communication network 18.

Advantageously, the mobile device 14 is configured to request the dispensing unit 12 to send, via the short-range wireless communication network 13, the version of the operating parameters currently configured in that dispensing unit 12, and to compare this version with the version of the operating parameters stored in that mobile device 14.

In an embodiment, if the version of the operating parameters currently configured in the dispensing unit 12 is older than the version of the operating parameters stored in the mobile device 14, the latter is configured to send, via the short-range wireless communication network 13, the operating parameters in that mobile device 14 to the dispensing unit 12.

In an embodiment, if the version of the operating parameters currently configured in the dispensing unit 12 is the same as the version of the operating parameters stored in the mobile device 14, no exchange or synchronization of data takes place.

In an embodiment, if the version of the operating parameters currently configured in the dispensing unit 12 is newer than the version of the operating parameters stored in the mobile device 14, the latter is configured to request the dispensing unit 12 to send, via the short-range wireless communication network 13, the operating parameters stored in that dispensing unit 12.

Conveniently, the mobile device 14 is configured to request the dispensing unit 12 to send, via the short-range wireless communication network 13, the version of the data item indicating the types of dispensing operations permitted to the dispensing unit 12 which is currently contained in that dispensing unit 12, and to compare such version with the version of the data item indicating the types of dispensing operations permitted to the dispensing unit 12 which is stored in that mobile device 14.

In an embodiment, if the version of the data item indicating the types of dispensing operations permitted to the dispensing unit 12 which is currently contained in the dispensing unit 12 is older than the version of the data item indicating the types of dispensing operations permitted to the dispensing unit 12 which is stored in the mobile device 14, then the latter is configured to send, via the short-range wireless communication network 13, the data item indicating the types of dispensing operations permitted to the dispensing unit 12 which is stored in the mobile storage means 40 of that mobile device to the dispensing unit 12.

In an embodiment, if the version of the data item indicating the types of dispensing operations permitted to the dispensing unit 12 which is currently contained in the dispensing unit 12 is equal to the version of the data item indicating the types of dispensing operations permitted to the dispensing unit 12 which is stored in the mobile storage means 40 of the mobile device 14, no exchange or synchronization of data takes place.

But if the version of the data item indicating the types of dispensing operations permitted to the dispensing unit 12 which is currently contained in the dispensing unit 12 is newer than the version of the data item indicating the types of dispensing operations permitted to the dispensing unit 12 which is stored in the mobile storage means 40 of the mobile device 14, then the latter is configured to request the dispensing unit 12 to send, via the short-range wireless communication network 13, the data item indicating the types of dispensing operations permitted to the dispensing unit 12 which is stored in the local storage means 30 of that dispensing unit 12.

Advantageously, the mobile device 14 is configured to request the dispensing unit 12 to also send, via the short-range wireless communication network 13, the version of the list of driver users 72 who are currently registered and authorized at that dispensing unit 12, and to compare such version with the version of the list of registered and authorized driver users 72 which is stored in that mobile device 14.

In an embodiment, if the version of the list of driver users 72 who are currently registered and authorized at the dispensing unit 12 is older than the version of the list of registered and authorized driver users 72 which is stored in the mobile device 14, then the latter is configured to send, via the short-range wireless communication network 13, the list of registered and authorized driver users 72 which is stored in that mobile device 14 to the dispensing unit 12.

In an embodiment, if the version of the list of the driver users 72 who are currently registered and authorized at the dispensing unit 12 is equal to the version of the list of registered and authorized driver users 72 which is stored in the mobile device 14, no exchange or synchronization of data takes place.

In an embodiment, if the version of the list of driver users 72 who are currently registered and authorized at the dispensing unit 12 is newer than the version of the list of registered and authorized driver users 72 which is stored in the mobile device 14, then the latter is configured to request the dispensing unit 12 to send, via the short-range wireless communication network 13, the list of registered and authorized driver users 72 which is stored in that dispensing unit 12.

In an embodiment, if the version of the list of driver users 72 who are currently registered and authorized at the dispensing unit 12 is newer than the version of the list of registered and authorized driver users 72 which is stored in the mobile device 14, then the latter is configured to request the dispensing unit 12 to send, via the short-range wireless communication network 13, the memory address where the data for the specific driver user 72 who is operating the mobile device 14 and is trying to perform a dispensing operation are stored.

The dispensing unit 12 can respond to this request by sending one of two different data items to the mobile device 14: the memory address (addrX) where the data for the driver user 72 are stored, or a null address (addr0) if the specific driver user 72 is not included in the list of registered and authorized driver users 72 which is stored in that dispensing unit 12. For example, the driver user 72 can be identified via his/her respective identification code (DriverID).

If the mobile device 14 receives the memory address (addrX) where the data for the driver user 72 are stored by the dispensing unit 12, then the mobile device 14 is configured to request the dispensing unit 12 to send, again via the short-range wireless communication network 13, the contents of the portion of memory associated with the memory address (addrX) received, in order to update the list of registered and authorized driver users 72 in that mobile device 14.

The authorization verification module 34 of the mobile device 14 is configured to enable the dispensing of fuel by the dispensing unit 12 as a result of the connection between that mobile device 14 and the dispensing unit 12, via the short-range wireless communication network 13.

In particular, according to the invention, the authorization verification module 34 of the mobile device 14 is configured to enable the dispensing of fuel by the dispensing unit 12 as a result of the connection between the mobile device 14 and the dispensing unit 12, via the respective short-range wireless communication modules 26 and 36, if the geographical position detected by the geolocation means 31 is located within a predetermined authorized geographical area and, more specifically, is located in one of the geographical areas included in the above-mentioned list of authorized geographical areas.

The authorization verification module 34 substantially checks if the geographical position detected by the geolocation means 31 is located in one of the geographical areas included in the list of authorized geographical areas, which is stored in the mobile storage means 40 and, if it finds that the geographical position detected by the geolocation means 31 is located in one of the geographical areas included in the list of authorized geographical areas, then the authorization verification module 34 enables the dispensing of fuel by the dispensing unit 12; otherwise, the dispensing of fuel is blocked.

In an embodiment, the authorization verification module 34 of the mobile device 14 is also configured to enable the dispensing of fuel by the dispensing unit 12 as a result of the connection between that mobile device 14 and the dispensing unit 12, via the short-range wireless communication network 13, if the specific driver user 72 who is operating the mobile device 14 is included in the list of driver users 72 who are registered and authorized to use the dispensing unit 12, which is stored in the mobile storage means 40 of that mobile device 14.

In this embodiment, the task of the authorization verification module 34 is substantially also to check for the presence of the driver user 72 in the list of driver users 72 who are registered and authorized to use the dispensing unit 12 and to enable the dispensing of fuel if the driver user 72 is present in the list; otherwise, the dispensing of fuel is blocked.

The enabling of the dispensing of fuel by the authorization verification module 34 comprises, advantageously, sending a command to begin dispensing, from the mobile device 14 to the dispensing unit 12, via the short-range wireless communication network 13.

The list of driver users 72 who are registered and authorized to use the dispensing unit 12 can include, for each driver user 72: an identification code (DriverID), name and surname, optionally an authentication code (for example a PIN and/or an iButton code), optionally an enabling flag.

Therefore, the check conducted by the authorization verification module 34 of the presence of the driver user 72 in the list of driver users 72 who are registered and authorized to use the dispensing unit 12, can be done by identification code (DriverID), or by name and surname.

Optionally, the authorization verification module 34 is further configured to enable the dispensing of fuel if the enabling flag of the specific driver user 72 who is operating the mobile device 14 is set to 1 or the like, if the driver user 72 is included in the list of driver users 72 who are registered and authorized to use the dispensing unit 12, which is stored in that mobile device 14.

Advantageously, the driver user 72 is enabled to use the dispensing unit 12 to perform the refueling of his/her motor vehicle for a specified time; this permission, in fact, is limited in time and its duration corresponds to a period of time that can be adjusted by the user in charge 70. When the period of time of the permission reaches its end, the driver user 72 will no longer be enabled to dispense fuel at the dispensing unit 12, without a new operation to enable that driver user.

The authorization verification module 34 is further configured to check the types of dispensing operations permitted to the dispensing unit 12.

In particular, the authorization verification module 34 is configured to request the dispensing unit 12 to send, via the short-range wireless communication network 13, the data item indicating the types of dispensing operations permitted to the dispensing unit 12 which is stored in the local storage means 30 of that dispensing unit 12.

According to another embodiment, the authorization verification module 34 checks the data item indicating the types of dispensing operations permitted to the dispensing unit 12 which is contained in the mobile storage means 40 of the mobile device 14.

The authorization verification module 34 furthermore verifies the types of dispensing operations permitted to the driver user 72 which are stored in the mobile storage means 40.

The user interface means 33 of the mobile device 14 are configured to allow the driver user 72 to select the type of dispensing operation that he/she intends to perform at the dispensing unit 12, following verification performed by the authorization verification module 34 of the types of dispensing operations permitted to the dispensing unit 12 and to the driver user 12.

By way of example, based on the check conducted by the authorization verification module 34 on the types of dispensing operations permitted, the user interface means 33 are configured to display at least one selection screen in which the driver user 72 can set the type of dispensing operation permitted to that driver user 72 and to the dispensing unit 12 that the driver user 72 wishes to use.

For example, the driver user 72 can indicate, on the selection screen, that the dispensing operation he/she intends to perform at the dispensing unit 12 is a dispensing operation to transfer fuel or a dispensing operation to refuel a motor vehicle for a third-party company, if such dispensing operations are permitted to the driver user 72 and to the dispensing unit 12, as a result of the check conducted by the authorization verification means 34, or he/she can select nothing if, for example, the driver user 72 wishes to perform a dispensing operation to refuel the motor vehicle assigned to him/her.

If the driver user 72 has indicated that the dispensing operation he/she intends to perform at the dispensing unit 12 is a dispensing operation to refuel a motor vehicle of a third-party company, then the user interface means 33 can display a screen to enable the driver user 72 to indicate, by selecting or setting an indicator, such as for example the license plate of the vehicle, for which motor vehicle of the third-party company, of those stored in the local storage means 40 of the mobile device 14, the refueling is performed.

The type of dispensing operation selected and the motor vehicle of the third-party company indicated by the driver user 72 via the user interface means 33 is sent by the mobile device 14 to the remote central device 20, via the telematic communication network 18, so as to enable the remote central device to also keep track of the dispensing operations performed by dispensing units 12 for the transfer of fuel and for the refueling of motor vehicles of third-party companies.

The selections made by the driver user 72 of the type of dispensing operation and the motor vehicles of third-party companies can be sent by the mobile device 14 to the dispensing unit 12 as well, via the short-range wireless communication network 13, so that they can be stored in the local storage means 30.

For example, the mobile device 14 can be configured to forward the selections made by the driver user 72 to the remote central device 20, via the telematic communication network 18, together with the data relating to the dispensing operation performed at the dispensing unit 12, which originate from the dispensing unit 12 and are received by the mobile device 14 via the short-range wireless communication network 13.

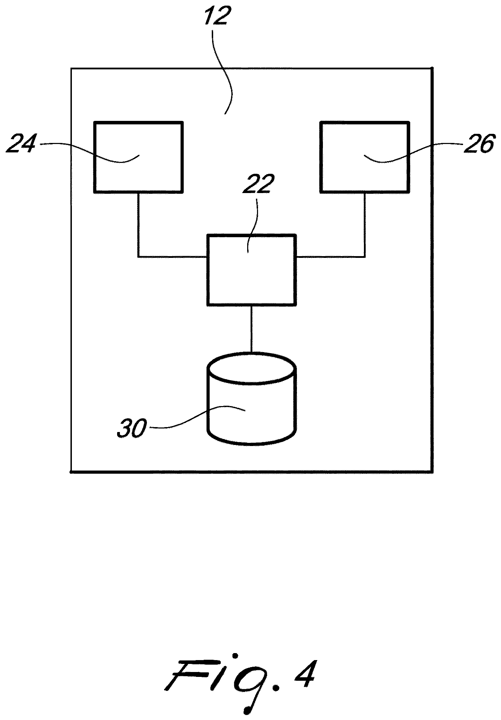

With reference to Figure 4, the dispensing unit 12 of the system according to the invention comprises an electronic control unit or controller 22, dispensing means 24, a short-range wireless communication module 26, and local storage means 30.

The electronic control unit 22 is the main functional element of the dispensing unit 12, and for this reason it is connected to and in communication with the other operating and/or functional elements that are comprised in the dispensing unit 12.

The electronic control unit 22 of the dispensing unit 12 is provided with adapted processing capacity and capacity to interface with the other elements of the dispensing unit 12, and it is adapted to command, control and coordinate the operation of the elements of the mobile device dispensing unit 12 with which it is connected and in communication, as well as to execute the operations to process the data or the requests arriving from such elements of the dispensing unit 12 and/or from the mobile device 14, and return the corresponding results to them.

If the dispensing unit 12 is a fixed dispensing pump, then the dispensing means 24 of the dispensing unit 12 are adapted to take the fuel from a tank connected thereto by way of a conduit, and to dispense the fuel thus taken in order to refuel motor vehicles or to transfer the fuel to mobile tanks.

If the dispensing unit 12 comprises a mobile tank, then the dispensing means 24 are adapted to take the fuel from that mobile tank and to dispense the fuel thus taken from the mobile tank in order to refuel motor vehicles.

The dispensing means 24 comprise at least one pumping device or pump, and at least one dispenser or dispensing nozzle. In an embodiment, the dispensing means 24 comprise a pump and a dispensing nozzle for each type of fuel available: for example, a first pump and a first dispensing nozzle for gasoline, a second pump and a second dispensing nozzle for Diesel fuel, and so on.

The short-range wireless communication module 26 of the dispensing unit 12, preferably of the Bluetooth type, and even more preferably of the BTLE (Bluetooth Low Energy) type, is adapted for the connection and preferably bidirectional communication, of the dispensing unit 12 with the mobile device 14, via the short-range wireless communication network 13. In particular, this short-range wireless communication session is established when the dispensing unit 12 and the mobile device 14 are within mutual reach, i.e. at an operating distance.

In the preferred embodiment of the system 10 according to the invention, wherein the short-range wireless communication module 26 of the dispensing unit 12 is of the Bluetooth type, such Bluetooth module 26 can integrate a microcontroller that is adapted to manage the Bluetooth communication with the mobile device 14, according to the corresponding protocols, and is adapted to manage the radio transmission through an antenna provided directly on the printed circuit.

The local storage means 30 of the dispensing unit 12 are adapted to store a portion of the information and data stored in the remote storage means 50 of the remote central device 20.

The local storage means 30 are adapted to store the information and data relating to the dispensing unit 12, and which therefore relate to all the dispensing operations performed at it.

By way of example, the local storage means 30 can store, for each dispensing operation: an identification code of the dispensing operation, the date and time of dispensing, the amount of fuel dispensed in the dispensing operation, the identification code of the driver user 72 who performed the dispensing operation, the name and surname of the driver user 72 who performed the dispensing operation, the license plate of the motor vehicle refueled in the dispensing operation, the make and/or model of the motor vehicle refueled in the dispensing operation.

The local storage means 30 can furthermore store, for each dispensing operation, at least one data item indicating the type of dispensing operation performed, such as, for example, an indicator data item that identifies that the dispensing operation was performed in order to transfer fuel or in order to refuel a motor vehicle of a third-party company.

These data stored in the local storage means 30, or a selection of these data, are sent by the dispensing unit 12 to the mobile device 14, which then forwards them to the remote central device 20, as explained previously.

The local storage means 30 store the last (i.e. the most recent) version of the operating parameters of the dispensing unit 12, and the last (i.e. the most recent) version of the list of driver users 72 who are registered and authorized to perform refueling operations at the dispensing units 12.

These data stored in the local storage means 30, or a selection of these data, are sent by the remote central device 20 to the mobile device 14, which then forwards them to the dispensing unit 12, as explained previously.

According to a possible embodiment, the dispensing unit 12 is configured to enable the dispensing of fuel as a result of the check, by that dispensing unit 12, that the driver user 72 is included in the list of driver users 72 who are registered and authorized to use the dispensing unit 12 and are stored in the local storage means 30, as a result of the connection between the mobile device 14 and the dispensing unit 12, via the respective short-range wireless communication modules 26 and 36.

In this case, the mobile device 14 is configured, as a result of the connection between the mobile device 14 and the dispensing unit 12, via respective short-range wireless communication modules 26 and 36, and as a result of a login operation performed by the driver user 72 on the mobile device 14, to transmit an identification code of the driver user 72 who performed the login on the mobile device 14 to the dispensing unit 12, which in turn is configured to check whether that identification code, received from the mobile device 14, is contained in its local storage means 30 and to enable the dispensing, if the identification code received is contained in the local storage means 30.

In an embodiment, the dispensing unit 12 further comprises authentication means which are configured to have the driver user 72 enter an authentication code, and to verify the presence of the driver user 72 associated with that authentication code in the list of driver users 72 who are registered and authorized to use the dispensing unit 12 to perform the refueling.

In this embodiment, the dispensing unit 12 can be configured to enable the dispensing of fuel in order to refuel a motor vehicle only ever following the positive outcome of the authentication of the driver user 72 by way of the above-mentioned authentication means, i.e. if the user who entered his/her authentication code is included in the list of driver users 72 who are registered and authorized at the dispensing unit 12.

In an embodiment, the authentication means comprise a numeric keypad and the authentication code is a PIN (Personal Identification Number).

In an embodiment, the authentication means comprise an iButton device reader and the authentication code is an iButton code. In this embodiment, the driver user 72 has an iButton device in which the iButton code is stored.

Advantageously, the mobile device 14 can also be configured to generate and send an accounting document to the third-party companies, such as, for example, a receipt, an invoice or the like, containing the data relating to dispensing operations performed by those third-party companies at the dispensing units 12 of the facility.

The operation of the system, according to the invention, is the following.

The driver user 72 approaches one or more dispensing units 12 which are present in a given geographical position.

Via its short-range wireless communication module 36, the mobile device 14 conducts a scan of the dispensing units 12 present and, as a result of the selection by the driver user 72 of one of the dispensing units 12 identified by the short-range wireless communication module 36, sets up a short-range wireless connection with the dispensing unit 12 selected by the driver user 12, so as to establish a communication session between the short-range wireless communication module 36 of the mobile device 14 and the short-range wireless communication module 26 of the dispensing unit 12.

At this point, if necessary, the mobile device performs an update of the operating parameters of the dispensing unit 12 and of the list of driver users 72 who are registered and authorized to perform refueling operations at the dispensing units 12, and downloads, from the dispensing unit 12, the data relating to past dispensing operations which are stored in the local storage means 30 of the dispensing unit but are not yet stored in the remote storage means 50, and forwards them to the remote central device 20.

Subsequently, following a login operation performed by the driver user 72 on the mobile device 14, the authorization verification module 34 of the mobile device 14 checks whether the driver user 72 who performed the login is included in the list of driver users 72 who are registered and authorized to use the dispensing unit 12, which is stored in the mobile storage means 40 of that mobile device 14.

Alternatively, the mobile device 14 sends the identification code of the driver user 72 who performed the login to the dispensing unit 12, and the dispensing unit 12 checks whether such identification code is contained in the list of registered and authorized driver users 72 stored in the local storage means 30 and, conveniently, sends the result of this check to the mobile device 14.

At this point, the authorization verification module 34 of the mobile device 14 also checks whether the geographical position detected by the geolocation means 31 is located in one of the geographical areas included in the list of authorized geographical areas, which is stored in the mobile storage means 40.

If the driver user 72 is included in the list of registered and authorized driver users and if the geographical position detected by the geolocation means 31 is located in one of the geographical areas included in the list of authorized geographical areas, then the authorization verification module 34 enables the dispensing of fuel by the dispensing unit 12; otherwise, the dispensing of fuel is blocked.

Subsequently, the authorization verification module 34 verifies the types of dispensing operation permitted to the driver user 72 and to the dispensing unit 12 which are stored in the local storage means 40 and, in particular, it checks whether the driver user 72 and the dispensing unit 12 are enabled to perform dispensing operations to transfer fuel or to refuel cars of third-party companies, and asks the driver user 72 to indicate, using the user interface means 33, the type of dispensing operation that he/she intends to perform from those permitted to the driver user 72 and to the dispensing unit 12.

At this point, the mobile device 14 sends the dispensing unit 12 a command to begin the dispensing operation.

The mobile device 14 also sends the geographical position of the mobile device 14 detected by the geolocation means 31 to the dispensing unit 12, and this geographical position is stored by the dispensing unit 12 in the local storage means 30.

When the dispensing operation is concluded, the mobile device 14 downloads the data from the dispensing unit 12 relating to the dispensing operation performed and forwards them, via the telematic communication network 18, to the remote central device 20 which stores them in the remote storage means 50.

If the dispensing operation performed has been performed in order to refuel a motor vehicle of a third-party company, the mobile device 14 generates an accounting document containing the data relating to the dispensing operation performed and sends it to the third-party company.

In practice it has been found that the invention fully achieves the set aim and objects. In particular, it has been seen that the system and the method for controlling the dispensing of fuel by a distribution facility, thus conceived, make it possible to overcome the qualitative limitations of the background art, in that they make it possible to manage operations to dispense fuel in different geographical areas as well as keep track of the dispensing operations performed to transfer fuel or to refuel motor vehicles of third-party companies i.e. of companies other than the company that owns the facility.

The invention, thus conceived, is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102023000006585 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A system (10) for controlling the dispensing of fuel by a distribution facility comprising at least one dispensing unit (12), at least one mobile processing device (14), operated by a respective driver user (72), and a remote central processing device (20), said dispensing unit (12) and said mobile device (14) being mutually connectable via a short-range wireless communication network (13), said mobile device (14) and said remote central device (20) being mutually connectable via a telematic communication network (18), **characterized in that** said mobile device (14) comprises:
- geolocation means (31) configured to detect the geographical position where said mobile device (14) is located; and
- an authorization verification module (34) configured to enable the dispensing of fuel by said dispensing unit (12) as a result of the connection between said mobile device (14) and said dispensing unit (12), via respective short-range wireless communication modules (26, 36), if the geographical position detected by said geolocation means (31) is located within a predetermined authorized geographical area.

2. The system according to claim 1, **characterized in that** said mobile device (14) comprises mobile storage means (40) configured to store a list of authorized geographic areas, said authorization verification module (34) being configured to enable the dispensing of fuel by said dispensing unit (12) if the geographical position detected by said geolocation means (31) is within a geographical area included in said list of authorized geographical areas.

3. The system according to one or more of the preceding claims, **characterized in that** said dispensing unit (12) comprises local storage means (30) configured to store the geographical position detected by said geolocation means (31) as a result of the connection between said mobile device (14) and said dispensing unit (12) via the respective short-range wireless communication modules (26, 36).

4. The system according to one or more of the preceding claims, **characterized in that** said mobile device (14) is configured to receive said list of authorized geographical areas from said remote central device (20), via said telematic communication network (18).

5. The system according to one or more of the preceding claims, **characterized in that** said local storage means (30) of said dispensing unit (12) are configured to store at least one data item indicating the types of dispensing operations permitted to said dispensing unit (12).

6. The system according to one or more of the preceding claims, **characterized in that** said mobile storage means (40) of said mobile device (14) are configured to store a list of the types of dispensing operations permitted to said driver user (72), said authorization verification module (34) being configured to verify the types of dispensing operations permitted to said dispensing unit (12) and the types of dispensing operations permitted to said driver user (72) stored in said mobile storage means (40).

7. The system according to one or more of the preceding claims, **characterized in that** said mobile device (24) comprises user interface means (33) configured to allow the driver user (72) to select the type of dispensing operation that he/she intends to perform at said dispensing unit (12), following verification performed by said authorization verification module (34) of the types of dispensing operations permitted to said dispensing unit (12) and to said driver user (72).

8. The system according to one or more of the preceding claims, **characterized in that** said mobile device (14) is configured to receive from said remote central device (20), via said telematic communication network (18), said at least one data item indicating the types of dispensing operations permitted to said dispensing unit and said list of the types of dispensing operations permitted to said driver user (72), said mobile device (14) being configured to forward to said dispensing unit (12), via said short-range wireless communication network (13), said at least one data item indicating the types of dispensing operations permitted to said dispensing unit (12).

9. The system according to one or more of the preceding claims, **characterized in that** said mobile storage means (40) of said mobile device (14) are configured to store a list of dispensing units (12) comprised in said distribution facility, said mobile device (14) being configured to receive said list of dispensing units (12) from said remote central device (20), via said telematic communication network (18).

10. The system according to one or more of the preceding claims, **characterized in that** said mobile storage means (40) of said mobile device (14) are configured to store a list of third-party companies, other than the company that owns said distribution facility, that are authorized to perform dispensing operations at said dispensing unit (12), and, for each one of said companies, a list of the corresponding authorized vehicles.

11. The system according to one or more of the preceding claims, **characterized in that** said mobile device (14) is configured to receive data relating to performed dispensing operations from said dispensing unit (12) via said short-range wireless communication network (13), and to forward said data to said remote central device (20), via said telematic communication network (18).

12. The system according to one or more of the preceding claims, **characterized in that** said mobile device (14) is configured to send an accounting document to said third-party companies containing the data relating to dispensing operations performed by said third-party companies at said dispensing unit (12).

13. A method for controlling the dispensing of fuel by a distribution facility, **characterized in that** it comprises the steps of:
- providing at least one dispensing unit (12), at least one mobile processing device (14), operated by a respective driver user (72), and a remote central processing device (20);
- establishing a short-range wireless communication session between said mobile device (14) and said dispensing unit (12), via respective short-range wireless communication modules (26, 36);
- detecting the geographical position where said mobile device (14) is located by virtue of geolocation means (31);
- enabling the dispensing of fuel if the geographical position detected by said geolocation means (31) is located within a predetermined authorized geographical area.
